# EUROPÄISCHE PATENTSCHRIFT

(11) **EP 2 024 214 B1**
(45) Veröffentlichungstag und Bekanntmachung des Hinweises auf die Patenterteilung: **09.08.2017**
(21) Anmeldenummer: 07725336.7
(22) Anmeldetag: 16.05.2007
(51) Int. Cl.: B60T 17/02, F04B 49/02

(54) **VERFAHREN ZUM STEUERN BEZIEHUNGSWEISE REGELN DES LUFTDRUCKS IN EINER DRUCKLUFTVERSORGUNGSEINRICHTUNG**
METHOD FOR CONTROLLING OR REGULATING THE AIR PRESSURE IN A COMPRESSED AIR SUPPLY DEVICE
PROCÉDÉ DE COMMANDE ET/OU DE RÉGULATION DE LA PRESSION D'AIR RÉGNANT DANS UN SYSTÈME D'ALIMENTATION EN AIR COMPRIMÉ

(30) Priorität: 19.05.2006 DE 102006023681
(43) Veröffentlichungstag der Anmeldung: 18.02.2009
(73) Patentinhaber: KNORR-BREMSE Systeme für Nutzfahrzeuge GmbH, 80809 München (DE)
(72) Erfinder: FRIES, Ansgar, 80993 München (DE); HILBERER, Eduard, 68766 Hockenheim (DE)
(74) Vertreter: Mattusch, Gundula
(86) Internationale Anmeldenummer: PCT/EP2007/004422
(87) Internationale Veröffentlichungsnummer: WO 2007/134798

(56) Entgegenhaltungen:
- EP-A- 1 479 584
- DE-A1- 3 923 882
- DE-A1- 4 322 210

## Beschreibung

Die vorliegende Erfindung betrifft ein Verfahren zum Steuern und/oder Regeln des Luftdruckes in einer Druckluftversorgungseinrichtung für ein Nutzfahrzeug, mit den Schritten: Erfassen mindestens eines Druckwertes in der Druckluftversorgungseinrichtung und/oder in an die Druckluftversorgungseinrichtung angeschlossenen Fahrzeugkomponenten, Ermitteln eines Feuchtigkeitswertes, der den Feuchtigkeitsgehalt in einer der Druckluftversorgungseinrichtung zugehörigen Luftfiltereinheit repräsentiert, und Öffnen einer einen Antrieb mit einem Kompressor verbindenden schaltbaren Kupplung sowie Öffnen eines Ablassventils der Druckluftversorgungseinrichtung, wenn der Druckwert über einem vorgegebenen Mindestwert liegt und der Feuchtigkeitswert einen vorgegebenen Schwellenwert überschreitet.

Die Erfindung betrifft weiterhin eine Druckluftversorgungseinrichtung sowie ein Nutzfahrzeug mit einer Druckluftversorgungseinrichtung.

Für Nutzfahrzeuge sind Druckluftversorgungseinrichtungen von zentraler Bedeutung. Insbesondere das Bremssystem eines pneumatisch gebremsten Nutzfahrzeugs benötigt Druckluft, ebenso wie zahlreiche weitere Verbraucher, beispielsweise Luftfederungen oder Liftachseinrichtungen. Die von der Druckluftversorgungseinrichtung aufzubereitende und zu verteilende Druckluft wird von einem Kompressor geliefert, der im Allgemeinen durch den Verbrennungsmotor des Nutzfahrzeugs angetrieben wird. Ein diesbezüglich gängiges Konzept sieht vor, den Kompressor über eine pneumatisch schaltbare Kupplung mit dem Verbrennungsmotor zu koppeln, wobei die Druckluft für die pneumatische Ansteuerung der Kupplung wiederum der Druckluftversorgungseinrichtung entnommen wird. Ein Beispiel für eine derartige Einrichtung ist in der DE 39 23 882 C2 angegeben.

Durch die Schaltbarkeit der Kupplung kann der Kompressorbetrieb bedarfsweise unterbrochen werden, beispielsweise während der Regenerationsphasen der Filtereinheit. Durch das Öffnen der Kupplung wird eine Luftförderung durch die Filtereinheit in Richtung der Verbraucher unterbrochen, während eine Regeneration der Filtereinheit stattfindet, indem trockene Luft aus den Vorratsbehältern in umgekehrter Richtung durch die Filtereinheit geleitet wird. Die trockene Luft nimmt die Feuchtigkeit auf, und kann dann über ein Ablassventil entweichen. Unabhängig von der Notwendigkeit einer Regeneration wird das Ablassventil auch dann geöffnet, wenn der in der Druckluftversorgungseinrichtung vorliegende Druck einen Maximalwert erreicht. Auf diese Weise wird durch die Druckluftversorgungseinrichtung eine Druckreglerfunktionalität zur Verfügung gestellt. In diesem Zusammenhang ist als nachteilig zu verzeichnen, dass jeder Eingriff des Druckreglers Druckluftverluste über das Ablassventil und sonstige mit den elektrischen, elektropneumatischen und pneumatischen Ventilen im Zusammenhang stehende Schaltverluste nach sich zieht.

Der Erfindung liegt die Aufgabe zugrunde, ein Verfahren mit verbessertem Energiehaushalt im Hinblick auf die Druckreglerfunktion zur Verfügung zu stellen.

Diese Aufgabe wird mit den Merkmalen des unabhängigen Anspruches gelöst.

Vorteilhafte Ausführungsformen der Erfindung sind in den abhängigen Ansprüchen angegeben.

Die Erfindung baut auf dem gattungsgemäßen Verfahren dadurch auf, dass die Kupplung geöffnet wird und das Ablassventil geschlossen bleibt, wenn die Schaltbarkeit der Kupplung gegeben ist, der Druckwert einen vorgegebenen Abschaltdruck erreicht und der Feuchtigkeitswert unterhalb des vorgegebenen Schwellenwerts liegt. Auf der Grundlage der Schaltbarkeit der Kupplung zwischen Verbrennungsmotor und Kompressor kann diese die Druckreglerfunktion unabhängig vom Ablassventil übernehmen. Erreicht der Druck den Abschaltdruck, so wird die Kupplung unter minimalem Druckluftverbrauch geöffnet, wohingegen das Ablassventil zur Vermeidung erheblich höherer Druckluftverluste geschlossen bleibt. Das Ablassventil muss nur noch geöffnet werden, wenn tatsächlich eine Regeneration erforderlich ist, was an der Überschreitung eines Feuchtigkeitsschwellenwerts zu erkennen ist. Insbesondere bei einer Betriebsweise des Fahrzeugs mit niedrigem Luftverbrauch kann hierdurch im Vergleich zur Druckreglung über das Ablassventil ein hohes Maß an Energieeinsparung erreicht werden, denn bei niedrigem Luftverbrauch muss die Filtereinheit nur selten regeneriert werden. Das Ablassventil kann insofern geschlossen bleiben, während die Druckregelung gleichwohl über die schaltbare Kupplung erfolgt. Bei hohem Druckluftverbrauch wird hingegen eine häufige Regeneration erfolgen müssen, so dass sich die Schalthäufigkeit des Abschaltventils erhöht. Während bei geringem Luftverbrauch die Energieeinsparung also insbesondere aufgrund der langen Öffnungsdauern der Kupplung und der alleinigen Druckregelung über die Kupplung erfolgt, wird die Energieeinsparung bei hohem Luftverbrauch insbesondere durch die gezielte Regeneration bei erreichtem Feuchtigkeitsschwellenwert zur Verfügung gestellt. Der Feuchtigkeitsgehalt in der Luftfiltereinheit kann gemessen oder berechnet werden.

Im Falle der Berechnung des Feuchtigkeitswertes ist vorgesehen, dass der Feuchtigkeitswert unter Berücksichtigung des geförderten Luftvolumens und des Wirkungsgrades der Luftfiltereinheit berechnet wird. Das geförderte Luftvolumen kann aus den Kenndaten des Kompressors und der Drehzahl des Kompressors berechnet werden. Der Feuchtigkeitsgehalt ergibt sich dann durch Summation beziehungsweise Integration der berechneten Feuchtigkeitsbeiträge über die Zeit.

Ebenfalls kann vorgesehen sein, dass bei der Berechnung des Feuchtigkeitswertes die Abnahme des Wirkungsgrades der Luftfiltereinheit mit der Laufzeit der Luftfiltereinheit berücksichtigt wird. Ohne Berücksichtigung des Laufzeitverhaltens wird bei neuer Luftfiltereinheit von einem eigentlich zu schlechten Wirkungsgrad ausgegangen. Mit Berücksichtigung des Laufzeitverhaltens kann der Abstand zwischen den Regenerationsphasen insbesondere bei neuer Filtereinheit erheblich vergrößert werden, was zu einer zusätzlichen Energieeinsparung führt.

Aus vergleichbaren Gründen ist sinnvoll, dass bei der Berechnung des Feuchtigkeitswertes die Temperatur der Umgebung berücksichtigt wird. Warme Luft speichert in der Regel mehr Wasser als kalte Luft. Definiert man einen temperaturabhängigen Korrekturfaktor und wendet man die auf der Grundlage dieser Definition ermittelten Korrekturfaktoren bei der Summation beziehungsweise Integration zur Ermittlung des Feuchtigkeitsgehaltes der Luftfiltereinheit an, so lässt sich die durchschnittliche Zeit zwischen den Regenerationsphasen nochmals verlängern, insbesondere im Winter.

Gemäß einer bevorzugten Ausführungsform der Erfindung ist vorgesehen, dass die Kupplung geschlossen bleibt und das Ablassventil geöffnet wird, wenn die Schaltbarkeit der Kupplung aufgrund eines Defektes nicht gegeben ist, der Druckwert einen vorgegebenen Abschaltdruck erreicht und der Feuchtigkeitswert unterhalb des vorgegebenen Schwellenwerts liegt. Die herkömmliche Druckregelung über das Ablassventil bietet also eine Ersatzfunktion zur primär eingesetzten Druckregelung über die schaltbare Kupplung.

Nützlicherweise ist vorgesehen, dass der mindestens eine Druckwert und der Feuchtigkeitswert von einer elektronischen Steuerung erfasst werden. Die Druckregelfunktion kann somit durch die elektronische Steuerung auf der Grundlage der ermittelten Werte erfolgen, vorzugsweise unter Berücksichtigung sonstiger das Druckluftversorgungssystem oder allgemein das Fahrzeug betreffender Parameter.

Gemäß einer besonders vorteilhaften Ausführungsform der Erfindung ist vorgesehen, dass die elektronische Steuerung in eine Druckluftaufbereitungsanlage integriert ist. Dies ist in der Praxis realisierbar, indem die herkömmliche elektronische Steuerung der Druckluftaufbereitungsanlage um die Funktionalität der Kupplungsansteuerung erweitert wird.

Es ist aber auch denkbar, dass die elektronische Steuerung über eine Schnittstelle mit einer in eine Druckluftaufbereitungsanlage integrierten Steuerung kommuniziert. Auf dieser Grundlage kann die herkömmliche elektronische Steuerung der Druckluftaufbereitungsanlage weitgehend unverändert bleiben, und die Schaltungsfunktionalität für die Kupplung kann extern zur Verfügung stehen.

Weiterhin kann vorgesehen sein, dass der mindestens eine Druckwert von einem Druckschalter erfasst wird, der bei Erreichen des Abschaltdruckes ein elektrisches Signal zum Öffnen der Kupplung erzeugt. Ein solcher Druckschalter kann die alleinige Regie über die Druckregelung übernehmen oder redundant zur Druckregelung durch die elektronische Steuerung wirken. Dabei kann das von dem Druckschalter erzeugte elektrische Signal direkt einem elektrisch schaltbaren Ventil zur pneumatischen Ansteuerung der Kupplung zugeführt werden oder der elektronischen Steuerung, so dass diese das elektrische Signal zur Vorsteuerung des Pneumatikventils zur Verfügung stellt.

Die Erfindung betrifft weiterhin eine Druckluftversorgungseinrichtung zur Durchführung eines erfindungsgemäßen Verfahrens und ein Nutzfahrzeug mit einer erfindungsgemäßen Druckluftversorgungseinrichtung.

Die Erfindung wird nun mit Bezug auf die begleitenden Zeichnungen anhand bevorzugter Ausführungsformen beispielhaft erläutert.

Es zeigen:
- Figur 1: eine schematische Darstellung einer erfindungsgemäßen Druckluftversorgungseinrichtung;
- Figur 2: eine schematische Darstellung einer erfindungsgemäßen Druckluftversorgungseinrichtung;
- Figur 3: eine schematische Darstellung einer erfindungsgemäßen Druckluftversorgungseinrichtung; und
- Figur 4: ein Flussdiagramm zur Erläuterung eines erfindungsgemäßen Verfahrens.

Bei der nachfolgenden Beschreibung der Zeichnungen bezeichnen gleiche Bezugszeichen gleiche oder vergleichbare Komponenten.

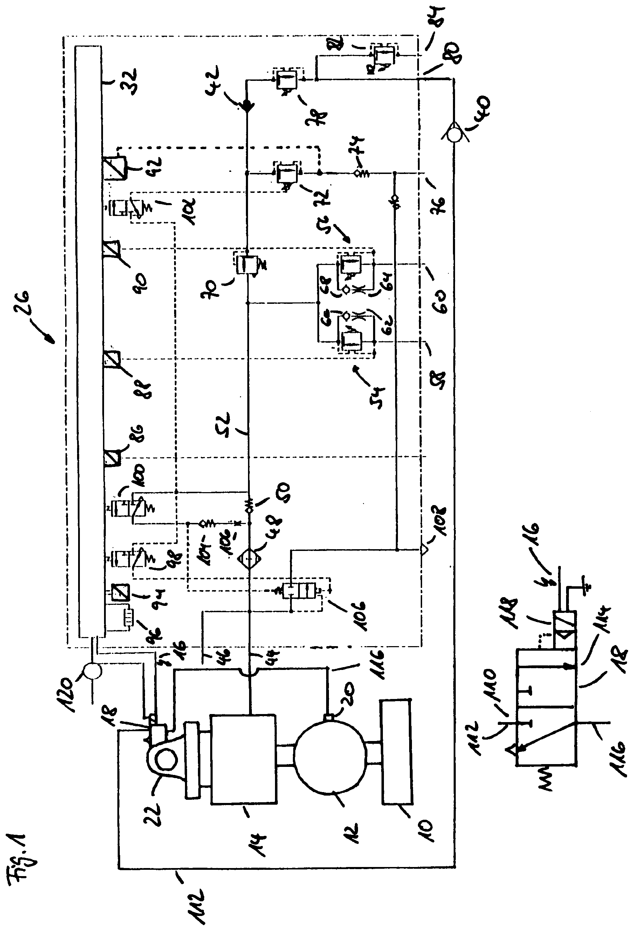

Figur 1 zeigt eine schematische Darstellung einer erfindungsgemäßen Druckluftversorgungseinrichtung. Es ist eine Druckluftaufbereitungsanlage 26 dargestellt. Mit dieser wird zugeführte Druckluft gefiltert und an verschiedene Druckluftverbraucher verteilt. Es ist ein Eingangsanschluss 44 vorgesehen, der mit einem außerhalb der Druckluftaufbereitungsanlage 26 vorgesehenen Kompressor 14 in Verbindung steht. Parallel zu dem Eingangsanschluss 44 ist ein Fremdbefüllungsanschluss 46 angeordnet. Die einem der Eingänge 44, 46 zugeführte Druckluft wird einer Filtereinheit 48 und von dort über ein Rückschlagventil 50 einer Hauptversorgungsleitung 52 zugeführt. An der Hauptversorgungsleitung 52 sind zwei Überströmventile 54, 56 parallel angeordnet, über die Anschlüsse 58, 60 für Betriebsbremskreise des Nutzfahrzeugs mit Druckluft beliefert werden. Parallel zu den Überströmventilen sind jeweils eine Drossel 62, 64 und ein Rückschlagventil 66, 68 angeordnet, wobei gemäß der vorliegenden Ausführungsform eine zur Strömung durch die Überströmventile 54, 56 parallele Strömung von der Hauptversorgungsleitung 52 zu den Anschlüssen 58, 60 der Betriebsbremskreise ermöglicht wird. Hierdurch kann insbesondere bei der Neubefüllung des Systems auch bei niedrigen Drücken in der Hauptversorgungsleitung 52 eine frühzeitige Befüllung der Betriebsbremskreisbehälter stattfinden. Ebenso ist es möglich, die Rückschlagventile unter Verzicht dieses Neubefüllungsvorteils in umgekehrter Richtung vorzusehen. Hierdurch wird dann eine Nachbefüllung von Nebenverbrauchern aus den Behältern der Betriebsbremskreise ermöglicht. In der Hauptversorgungsleitung 52 ist weiterhin ein Druckbegrenzer 70 vorgesehen. Auf der druckbegrenzten Seite des Druckbegrenzers 70 zweigen zwei weitere Leitungen parallel ab, wobei durch eine Leitung über ein Überströmventil 72 und ein Rückschlagventil 74 ein Anschluss 76 für die Feststellbremse und die Anhängerbremsanlage beliefert wird. Die andere Leitung beliefert über ein Rückschlagventil 42 und ein Überströmventil 78 einen Anschluss 80, der für die Betätigung der Kompressorkupplung 12 vorgesehen ist. Dem Überströmventil 78 ist ein weiteres Überströmventil 82 in einer abzweigenden Leitung nachgeordnet, über das ein weiterer Nebenverbraucheranschluss 84 beliefert wird.

Mit der elektronischen Steuerung 32 stehen mehrere Drucksensoren 86, 88, 90, 92 in Verbindung, wobei der Drucksensor 88 den Druck am Betriebsbremsanschluss 58, der Drucksensor 90 den Druck am Betriebsbremsanschluss 60 und der Drucksensor 62 den Druck unmittelbar hinter dem Überströmventil 72 für den Anschluss 76 von Feststellbremse und Anhänger misst. Mit der elektronischer Steuerung 32 stehen weiterhin ein Temperatursensor 94 und eine Heizung 96 in Verbindung. Weiterhin sind an die elektronische Steuerung 32 drei Magnetventile 98, 100, 102 angeschlossen, das Druckreglermagnetventil 98, das Regenerationsmagnetventil 100 und ein Magnetventil 102 zur Druckzusatzsteuerung des Überströmventils 72. Die Magnetventile 78, 100, 102 sind als 3/2-Wegeventile ausgelegt und alle im stromlosen Zustand geschlossen. Im geschlossen Zustand steht der Druck der Hauptversorgungsleitung 52 an den Eingängen der Magnetventile 98, 100, 102 an. Zur Einleitung eines Regenerationsvorganges ist es erforderlich, das Regenerationsmagnetventil 100 und das Druckreglermagnetventil 98 zu bestromen und somit in ihren nicht dargestellten Zustand zu überführen. Dies hat zur Folge, dass den Betriebsbremsbehältern über die Hauptversorgungsleitung 52 trockene Druckluft entnommen wird, die dann unter Umgehung des Rückschlagventils 50 über das Regenerationsmagnetventil 100 ein weiteres Rückschlagventil 104 und eine Drossel 106, die Filtereinheit 48 in umgekehrter Richtung durchströmt, um dann über ein aufgrund der Umschaltung des Druckreglermagnetventils 98 in seine nicht dargestellte Schaltstellung umgeschaltetes Ablassventil 106 zu einem Ablass 108 und von dort in die Atmosphäre abzuströmen. Außerhalb der Druckluftaufbereitungsanlage 26 sind der bereits erwähnte Kompressor 14, ein Verbrennungsmotor 10 und eine dem Kompressor 14 mit dem Verbrennungsmotor 10 verbindende schaltbare Kupplung 12 dargestellt. Der Kompressor 14 hat einen Ansaugstutzen 22, über den die zu komprimierende Luft angesaugt wird. Im Bereich dieser Luftzuführung ist ein 3/2-Wegeventil 18 angeordnet, das vorliegend, wie nochmals separat dargestellt, als elektrisch vorgesteuertes Pneumatikventil ausgelegt ist. Das Pneumatikventil 18 hat einen Eingangsanschluss 110, an dem eine zu dem Kupplungsanschluss 80 führende Leitung 112 angeschlossen ist. In dieser Leitung 112 ist ein Rückschlagventil 40 angeordnet, dass eine Strömung vom Kupplungsanschluss 80 zu dem Ventil 18 zulässt und eine umgekehrte Strömung unterbindet. Das Ventil 18 hat einen Ausgangsanschluss, der über eine Leitung 116 mit einem Schalteingang 20 der Kupplung 12 gekoppelt ist. Über einen elektrischen Eingang 118 zum Zwecke der Zuführung eines Signals 16 ist das Ventil mit der elektronischen Steuerung 32 der Druckluftaufbereitungsanlage 26 sowie mit Masse, die an einem Zentralstecker 120 abgegriffen wird, verbunden.

Die Druckluftversorgungseinrichtung gemäß Figur 1 arbeitet im Hinblick auf die schaltbare Kupplung 12 wie folgt. Soll die im nicht druckangesteuerten Zustand geschlossene Kupplung 12 geöffnet werden, so gibt die elektronische Steuerung 32 ein Ausgangssignal 16 an das elektrisch vorgesteuerte Pneumatikventil 18. Das Ventil 18 öffnet, und es stellt auf diese Weise eine Verbindung zwischen dem Kupplungsanschluss 80 der Druckluftaufbereitungsanlage 26 und dem Schalteingang 20 der Kupplung 12 her. Durch die pneumatische Ansteuerung des Schalteingangs 20 wird die Kupplung 12 geöffnet. Soll eine Regeneration der Filtereinheit 48 erfolgen, so werden das Druckreglermagnetventil 98 und das Regenerationsmagnetventil 100 umgeschaltet, so dass das Ablassventil 106 öffnet und trockene Luft aus den verbraucherseitigen Behältern in umgekehrte Richtung durch die Filtereinheit 48, das Ablassventil 106 und den Ablass 108 ins Freie strömen kann. Ist eine Regeneration jedoch nicht erforderlich, so bleiben die Magnetventile 98, 100 im geschlossenen Zustand. Das Öffnen der Kupplung 12 übernimmt dann alleine die Druckreglerfunktion. Zum Schließen der Kupplung 12 wird die Bestromung des elektrischen Eingangs 118 wieder ausgesetzt, so dass der Schalteingang 20 entlüftet wird. Durch die Rückschlagventile 40, 42 wird eine kurze Schaltzeit sichergestellt. Das Rückschlagventil 42 verhindert eine Rückströmung von Druckluft aus der Leitung 112 in die Richtung der Abzweigungen der Betriebsbremsanschlüsse 58, 60 und des Anschlusses für die Feststellbremse sowie den Anhänger. Das Rückschlagventil 40 verhindert zusätzlich eine Rückströmung aus der Leitung 112 zu dem Nebenverbraucheranschluss 84. Je nach der Auslegung der Anlage und den Bedürfnissen im Hinblick auf die Schaltzeit, kann eines der Rückschlagventile 40, 42 ausreichend sein. Die Rückschlagventile 40, 42 stellen somit sicher, dass in der intakten Leitung 112 stets ein gewisses Druckniveau aufrechterhalten werden kann, so dass beim Umschalten des Ventils 18 ein rascher Druckaufbau am Schalteingang 20 des Kompressors 14 sichergestellt ist. Ein zusätzlicher Vorratsbehälter im Bereich der Leitung 112, mit dem man ebenfalls die Aufrechterhaltung eines solchen Druckniveaus sicherstellen könnte, ist somit entbehrlich.

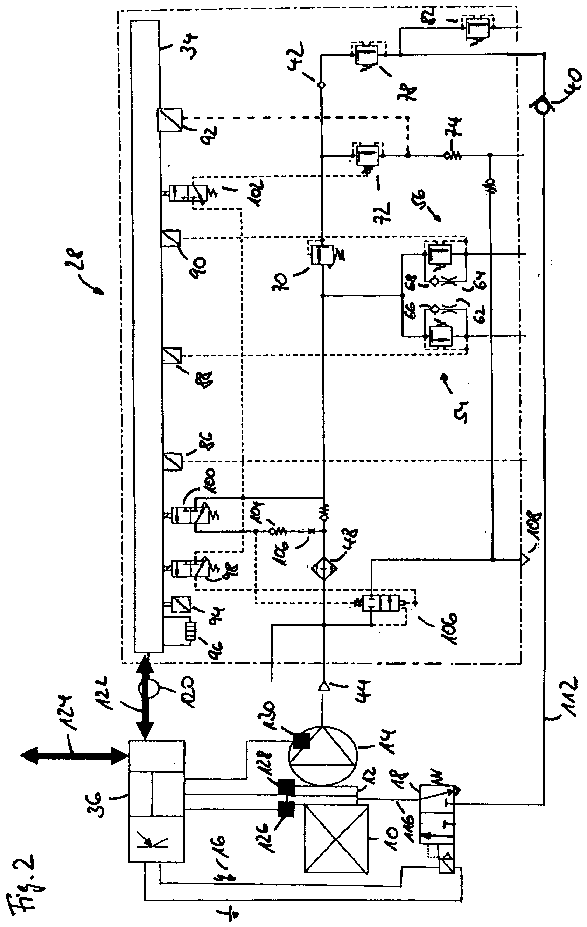

Figur 2 zeigt eine schematische Darstellung einer erfindungsgemäßen Druckluftversorgungseinrichtung. Zahlreiche Eigenschaften der Ausführungsform gemäß Figur 2 sind identisch zur Ausführungsform gemäß Figur 1, beispielsweise auch die bevorzugte Anordnung des elektrisch vorgesteuerten Pneumatikventils 18 im Bereich des Lufteinlasses des Kompressors 14, auch wenn dies hier nicht dargestellt ist. Im Unterschied zur Ausführungsform gemäß Figur 1 ist bei der Ausführungsform gemäß Figur 2 eine externe Steuerung 36 zusätzlich zu der elektronischen Steuerung 34 in der Druckluftaufbereitungsanlage 28 vorgesehen. Die externe Steuerung 36 ist geeignet, mit der internen Steuerung 34 über eine Schnittstelle 122, die vorzugsweise von dem Zentralstecker 120 zur Verfügung gestellt wird, zu kommunizieren. Ebenfalls ist eine Schnittstelle 124 zu sonstigen Fahrzeugkomponenten vorgesehen, beispielsweise über einen CAN-Bus zu einem Fahrzeugführungsrechner. Baulich können die Schnittstellen 122, 124 vereinigt sein. Es ist in Figur 2 weiterhin gezeigt, dass ein Drehzahlsensor 126 auf der Eingangseite der Kupplung 12 und ein weiterer Drehzahlsensor 128 auf der Ausgangsseite der Kupplung 12 angeordnet sein können. Weiterhin ist ein Temperatursensor 130 am Kompressor 14 vorgesehen. Die Signale der Sensoren 126, 128, 130 werden der externen Steuerung 36 zugeführt und von dieser im Hinblick auf die Ansteuerung des Ventils berücksichtigt, auf andere Weise verwertet, beispielsweise im Hinblick auf eine Funktionsüberwachung, und/oder in ursprünglicher oder verarbeiteter Form über die Schnittstellen 122, 124 weitergegeben.

Die nützliche Ermittlung der Drehzahlen und der Temperatur kann auch im Zusammenhang mit der Ausführungsform gemäß Figur 1 vorgesehen sein, auch wenn dies dort nicht dargestellt ist. Die entsprechenden Daten werden dann der internen Steuerung 32 der Druckluftaufbereitungsanlage 26 zugeführt.

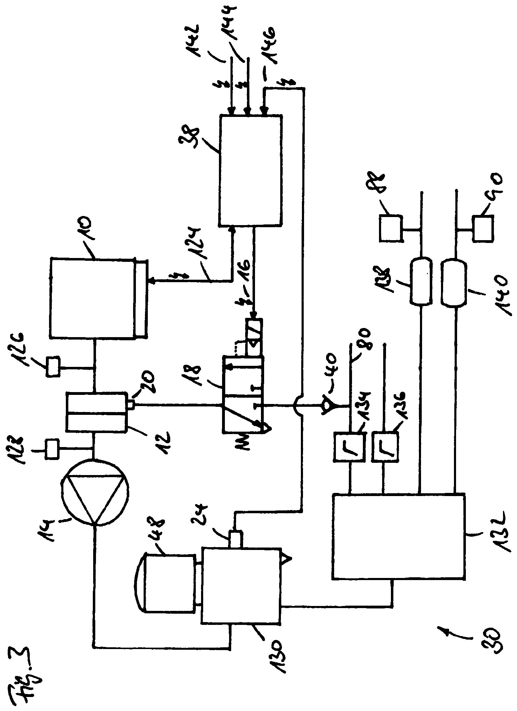

Figur 3 zeigt eine schematische Darstellung einer erfindungsgemäßen Druckluftversorgungseinrichtung. Die hier dargestellte Druckluftversorgungseinrichtung ist in der Form mehrerer verteilter Einzelbaugruppen dargestellt. Insbesondere sind ein Druckregler 130 mit aufgesetzter Filtereinheit 48, ein Mehrkreisschutzventil 132, Druckbegrenzer 134, 136 und eine elektronische Steuerung 38 dargestellt. Die Komponenten können real in der beschriebenen Weise verteilt sein. Die verteilte Darstellung kann aber auch im Sinne einer funktionalen Aufteilung verstanden werden, wobei real Druckregler, Mehrkreisschutzventil, die Druckbegrenzer und/oder die elektronische Steuerung integriert realisiert sind, beispielsweise wie im Zusammenhang mit den Figuren 1 und 2 dargestellt.

Bei der Ausführungsform gemäß Figur 3 ist wiederum ein Kompressor 14 über eine schaltbare Kupplung 12 mit einem Verbrennungsmotor 10 gekoppelt. Der Kompressor 14 liefert Druckluft an den Druckregler 130, von wo die Druckluft an das Mehrkreisschutzventil 132 weitergegeben wird. Das Mehrkreisschutzventil 132 verteilt die Druckluft auf die Behälter 138, 140 und sonstige Anschlüsse, von denen einer als ein mit einem Druckbegrenzer 136 versehener Anschluss dargestellt ist. Ein weiterer Anschluss ist der Kupplungsanschluss 80, ebenfalls über einen Druckbegrenzer 134 beliefert. Von dem Kupplungsanschluss 80 wird über das die Schaltzeiten sicherstellende Rückschlagventil 40 Druckluft an das elektrisch vorgesteuerte Pneumatikventil 18 geliefert. Die Ansteuerung des Ventils 18 erfolgt durch die elektronische Steuerung 38, die über die Schnittstelle 124 ebenfalls mit dem Verbrennungsmotor beziehungsweise mit einer Motorsteuerung kommuniziert. Die elektronische Steuerung 38 weist mehrere Eingänge 142, 144, 146 auf. Die Eingänge 142, 144 symbolisieren die Möglichkeit, der Steuerung 38 Temperatur-, Druck- und/oder Drehzahlinformation zuzuführen, beispielsweise gemessen durch die Drucksensoren 88, 90 der Betriebsbremskreise, und/oder durch die Drehzahlsensoren 126, 128 an der Eingangsseite und der Ausgangsseite der Kupplung 12. An dem Druckregler 130 ist ein Druckschalter 24 vorgesehen. Dieser steht mit dem Eingang 146 der elektronischen Steuerung 38 in Verbindung. Somit kann der elektronischen Steuerung 38 ein druckabhängiges elektrisches Signal zugeführt werden.

Die Druckluftversorgungseinrichtung gemäß Figur 3 arbeitet wie folgt. Auf der Grundlage der über die Eingänge 142, 144, 146 und die Schnittstelle 124 zur Verfügung gestellten Informationen kann die elektronische Steuerung 38 ein elektrisches Signal 16 an das Ventil 18 liefern, so dass dieses umschaltet und die Kupplung 12 aufgrund der Belüftung des Schalteingangs 20 öffnet. Die Entscheidung zur Ausgabe des Signals 16 kann nun auf der Grundlage erfolgen, dass durch Sensoren gemessene Drücke, Temperaturen oder Drehzahlen ein Öffnen der Kupplung 12 erforderlich machen. Parallel hierzu kann das Öffnen der Kupplung aber auch auf der Grundlage des von dem Druckschalter 24 ausgegebenen Signals erfolgen. Erfahren Komponenten der in Figur 3 dargestellten Ausführungsform einen Defekt, so dass beispielsweise die Druckniveaus in den Betriebsbremskreisen nicht mehr zuverlässig gemessen werden, kann durch die Anwesenheit des Druckschalters 24 und der hierdurch ermöglichten Schaltfunktionalität dennoch ein Öffnen der Kupplung 12 erfolgen, was deren Zerstörung aufgrund der geschilderten Defekte verhindert.

Ebenfalls ist neben der in Figur 3 dargestellten Variante möglich, das Ausgangssignal des Druckschalters 24 direkt dem Ventil 18 zuzuführen, so dass selbst bei einem Komplettausfall der elektronischen Steuerung 38 ein Öffnen der Kupplung 12 erfolgen kann.

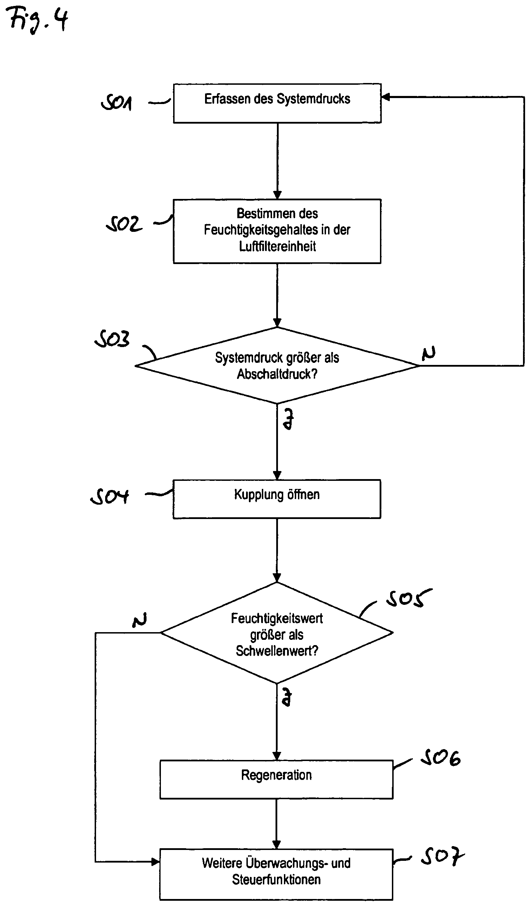

Figur 4 zeigt ein Flussdiagramm zur Erläuterung eines erfindungsgemäßen Verfahrens. In einem Schritt S01 wird der Systemdruck erfasst, beispielsweise im Bereich der Betriebsbremskreise. In einem Schritt S02 wird der Feuchtigkeitsgehalt in der Luftfiltereinheit bestimmt, entweder durch Messung oder durch Berechnung auf der Grundlage des vom Kompressor geförderten Luftvolumens, der Kompressordrehzahl und des Wirkungsgrades der Luftfiltereinheit. Im Schritt S03 wird ermittelt, ob der Systemdruck größer ist als ein vorgegebener Abschaltdruck. Ist dies der Fall, so wird in Schritt S04 die Kupplung geöffnet. Im gegenteiligen Fall erfolgt keine Öffnung der Kupplung, und der Ablauf kehrt zu Schritt S01 zurück. Nach dem Öffnen der Kupplung in Schritt S04 wird in Schritt S05 geprüft, ob der Feuchtigkeitswert größer ist als ein vorgegebener Schwellenwert. Ist dies der Fall, so wird in Schritt S06 die Regeneration eingeleitet. Falls der Feuchtigkeitswert nicht größer ist als der Schwellenwert, so können weitere Überwachungs- und Steuerfunktionen gemäß Schritt S07 erfolgen, ebenso wie im Anschluss an die Regeneration gemäß Schritt S06.

Es ist zu bemerken, dass das Flussdiagramm gemäß Figur 4 nur einen Teilaspekt der Überwachung im Hinblick auf den Systemdruck und den Feuchtigkeitsgehalt darstellt. Beispielsweise wird die Überprüfung, ob der Feuchtigkeitswert größer ist als der Schwellenwert auch unabhängig davon ausgeführt, ob der Abschaltdruck vorliegt. Eine Regeneration wird auch bei niedrigeren Drücken vorgenommen, wenn der Systemdruck größer als ein Mindestdruck ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Antrieb
- 12: Kupplung
- 14: Kompressor
- 16: Signal
- 18: Ventil
- 20: Schalteingang
- 22: Frischluftzuführung
- 24: Druckschalter
- 26: Druckluftaufbereitungsanlage
- 28: Druckluftaufbereitungsanlage
- 30: Druckluftaufbereitungsanlage
- 32: elektronische Steuerung
- 34: elektronische Steuerung
- 36: elektronische Steuerung
- 38: elektronische Steuerung
- 40: Rückschlagventil
- 42: Rückschlagventil
- 44: Eingangsanschluss
- 46: Fremdbefüllungsanschluss
- 48: Filtereinheit
- 50: Rückschlagventil
- 52: Hauptversorgungsleitung
- 54: Überströmventil
- 56: Überströmventil
- 58: Anschluss Betriebsbremskreis
- 60: Anschluss Betriebsbremskreis
- 62: Drossel
- 64: Drossel
- 66: Rückschlagventil
- 68: Rückschlagventil
- 70: Druckbegrenzer
- 72: Überströmventil
- 74: Rückschlagventil
- 76: Anschluss Feststellbremse/Anhänger
- 78: Überströmventil
- 80: Anschluss Kupplung
- 82: Überströmventil
- 84: Anschluss Nebenverbraucher
- 86: Drucksensor
- 88: Drucksensor
- 90: Drucksensor
- 92: Drucksensor
- 94: Temperatursensor
- 96: Heizung
- 98: Magnetventil
- 100: Magnetventil
- 102: Magnetventil
- 104: Rückschlagventil
- 106: Ablassventil
- 108: Ablass
- 110: Eingangsanschluss
- 112: Leitung
- 114: Ausgangsanschluss
- 116: Leitung
- 118: elektrischer Eingang
- 120: Zentralstecker
- 122: Schnittstelle
- 124: Schnittstelle
- 126: Drehzahlregler
- 128: Drehzahlregler
- 130: Druckregler
- 132: Mehrkreisschutzventil
- 134: Druckbegrenzer
- 136: Druckbegrenzer
- 138: Behälter
- 140: Behälter
- 142: Eingang
- 144: Eingang
- 146: Eingang

## Patentansprüche

1. Verfahren zum Steuern und/oder Regeln des Luftdruckes in einer Druckluftversorgungseinrichtung (26, 28, 30) für ein Nutzfahrzeug, mit den Schritten:
- Erfassen mindestens eines Druckwertes in der Druckluftversorgungseinrichtung und/oder in an die Druckluftversorgungseinrichtung angeschlossenen Fahrzeugkomponenten,
- Ermitteln eines Feuchtigkeitswertes, der den Feuchtigkeitsgehalt in einer der Druckluftversorgungseinrichtung zugehörigen Luftfiltereinheit (48) repräsentiert, und
- Öffnen einer einen Antrieb (10) mit einem Kompressor (14) verbindenden schaltbaren Kupplung (12) sowie Öffnen eines Ablassventils (106) der Druckluftversorgungseinrichtung, wenn der Druckwert über einem vorgegebenen Mindestwert liegt und der Feuchtigkeitswert einen vorgegebenen Schwellenwert überschreitet,
**dadurch gekennzeichnet, dass** die Kupplung (12) geöffnet wird und das Ablassventil (106) geschlossen bleibt, wenn die Schaltbarkeit der Kupplung gegeben ist, der Druckwert einen vorgegebenen Abschaltdruck erreicht und der Feuchtigkeitswert unterhalb des vorgegebenen Schwellenwerts liegt.

2. Verfahren zum Steuern und/oder Regeln des Luftdruckes in einer Druckluftversorgungseinrichtung nach Anspruch 1, **dadurch gekennzeichnet, dass** der Feuchtigkeitswert unter Berücksichtigung des geförderten Luftvolumens und des Wirkungsgrades der Luftfiltereinheit (48) berechnet wird.

3. Verfahren zum Steuern und/oder Regeln des Luftdruckes in einer Druckluftversorgungseinrichtung nach Anspruch 2, **dadurch gekennzeichnet, dass** bei der Berechnung des Feuchtigkeitswertes die Abnahme des Wirkungsgrades der Luftfiltereinheit mit der Laufzeit der Luftfiltereinheit berücksichtigt wird.

4. Verfahren zum Steuern und/oder Regeln des Luftdruckes in einer Druckluftversorgungseinrichtung nach Anspruch 2 oder 3, **dadurch gekennzeichnet, dass** bei der Berechnung des Feuchtigkeitswertes die Temperatur der Umgebung berücksichtigt wird.

5. Verfahren zum Steuern und/oder Regeln des Luftdruckes in einer Druckluftversorgungseinrichtung nach einem der vorhergehenden Ansprüche, **dadurch gekennzeichnet, dass** die Kupplung geschlossen bleibt und das Ablassventil (106) geöffnet wird, wenn die Schaltbarkeit der Kupplung (12) aufgrund eines Defektes nicht gegeben ist, der Druckwert einen vorgegebenen Abschaltdruck erreicht und der Feuchtigkeitswert unterhalb des vorgegebenen Schwellenwerts liegt.

6. Verfahren zum Steuern und/oder Regeln des Luftdruckes in einer Druckluftversorgungseinrichtung nach einem der vorhergehenden Ansprüche, **dadurch gekennzeichnet, dass** der mindestens eine Druckwert und der Feuchtigkeitswert von einer elektronischen Steuerung erfasst werden.

7. Verfahren zum Steuern und/oder Regeln des Luftdruckes in einer Druckluftversorgungseinrichtung nach Anspruch 6, **dadurch gekennzeichnet, dass** die elektronische Steuerung (32) in eine Druckluftaufbereitungsanlage (26) integriert ist.

8. Verfahren zum Steuern und/oder Regeln des Luftdruckes in einer Druckluftversorgungseinrichtung nach einem der Ansprüche 6 oder 7, **dadurch gekennzeichnet, dass** die elektronische Steuerung (36) über eine Schnittstelle mit einer in eine Druckluftaufbereitungsanlage (28) integrierten Steuerung (34) kommuniziert.

9. Verfahren zum Steuern und/oder Regeln des Luftdruckes in einer Druckluftversorgungseinrichtung nach einem der vorherigen Ansprüchen, **dadurch gekennzeichnet, dass** der mindestens eine Druckwert von einem Druckschalter (24) erfasst wird, der bei Erreichen des Abschaltdruckes ein elektrisches Signal zum Öffnen der Kupplung erzeugt.

10. Druckluftversorgungseinrichtung für ein Nutzfahrzeug zur Durchführung eines Verfahrens nach einem der vorhergehenden Ansprüche.

11. Nutzfahrzeug mit einer Druckluftversorgungseinrichtung nach einem der vorhergehenden Ansprüche.

## Claims

1. Method for controlling and/or regulating the air pressure in a compressed air supply device (26, 28, 30) for a utility vehicle, with the steps:
- detection of at least one pressure value in the compressed air supply device and/or in vehicle components connected to the compressed air supply device,
- determination of a moisture value which represents the moisture content in an air filter unit (48) belonging to the compressed air supply device, and
- opening of a shiftable clutch (12) connecting a drive (10) to a compressor (14), and also opening of a discharge valve (106) of the compressed air supply device when the pressure value lies above a pretermined minimum value and the moisture value overshoots a predetermined threshold value,
**characterized in that** the clutch (12) is opened and the discharge valve (106) remains closed when the shiftability of the clutch is afforded, the pressure value reaches a predetermined switch-off pressure and the moisture value lies below the predetermined threshold value.

2. Method for controlling and/or regulating the air pressure in a compressed air supply device according to Claim 1, **characterized in that** the moisture value is calculated, taking into account the conveyed air volume and the efficiency of the air filter unit (48).

3. Method for controlling and/or regulating the air pressure in a compressed air supply device according to Claim 2, **characterized in that** the decrease in the efficiency of the air filter unit with the running time of the air filter unit is taken into account in the calculation of the moisture value.

4. Method for controlling and/or regulating the air pressure in a compressed air supply device according to Claim 2 or 3, **characterized in that** the temperature of the surroundings is taken into account in the calculation of the moisture value.

5. Method for controlling and/or regulating the air pressure in a compressed air supply device according to one of the preceding claims, **characterized in that** the clutch remains closed and the discharge valve (106) is opened when the shiftability of the clutch (12) is not afforded on account of a defect, the pressure value reaches a predetermined switch-off pressure and the moisture value lies below the predetermined threshold value.

6. Method for controlling and/or regulating the air pressure in a compressed air supply device according to one of the preceding claims, **characterized in that** the at least one pressure value and the moisture value are detected by an electronic control.

7. Method for controlling and/or regulating the air pressure in a compressed air supply device according to Claim 6, **characterized in that** the electronic control (32) is integrated into a compressed air preparation plant (26).

8. Method for controlling and/or regulating the air pressure in a compressed air supply device according to one of Claims 6 and 7, **characterized in that** the electronic control (36) communicates via an interface with a control (34) integrated into a compressed air preparation plant (28).

9. Method for controlling and/or regulating the air pressure in a compressed air supply device according to one of the preceding claims, **characterized in that** the at least one pressure value is detected by a pressure switch (24) which, when the switch-off pressure is reached, generates an electrical signal for opening the clutch.

10. Compressed air supply device for a utility vehicle for carrying out a method according to one of the preceding claims.

11. Utility vehicle having a compressed air supply device according to one of the preceding claims.

## Revendications

1. Procédé de commande et/ou de régulation de la pression de l'air dans un dispositif (26, 28, 30) d'alimentation en air comprimé pour un véhicule utilitaire, comprenant les stades :
- détection d'au moins une valeur de la pression dans le dispositif d'alimentation en air comprimé et/ou dans un composant du véhicule raccordé au dispositif d'alimentation en air comprimé,
- détermination d'une valeur d'humidité, qui représente la teneur en humidité dans une unité (48) de filtre d'air associée au dispositif d'alimentation en air comprimé, et
- ouverture d'un embrayage (12) embrayable reliant un entraînement (10) à un compresseur (14), ainsi qu'ouverture d'une soupape (106) d'évacuation du dispositif d'alimentation en air comprimé, lorsque la valeur de la pression est supérieure à une valeur minimum donnée à l'avance et lorsque la valeur de l'humidité dépasse une valeur de seuil donnée à l'avance,
**caractérisé en ce que** l'on ouvre l'embrayage (12) et la soupape (106) d'évacuation reste fermée, s'il y a l'aptitude à embrayer l'embrayage, si la valeur de la pression atteint une pression de débrayage donnée à l'avance et si la valeur de l'humidité est inférieure à la valeur de seuil donnée à l'avance.

2. Procédé de commande et/ou de régulation de la pression de l'air dans un dispositif d'alimentation en air comprimé suivant la revendication 1,
**caractérisé en ce que** l'on calcule la valeur de l'humidité en tenant compte du volume d'air exigé et du rendement de l'unité (48) de filtre d'air.

3. Procédé de commande et/ou de régulation de la pression de l'air dans un dispositif d'alimentation en air comprimé suivant la revendication 2,
**caractérisé en ce que**, dans le calcul de la valeur de l'humidité, on tient compte de la diminution du rendement de l'unité de filtre d'air, en fonction de la durée de vie de l'unité de filtre d'air.

4. Procédé de commande et/ou de régulation de la pression de l'air dans un dispositif d'alimentation en air comprimé suivant la revendication 2 ou 3, caractérisé dans le calcul de la valeur de l'humidité, on tient compte de la température ambiante.

5. Procédé de commande et/ou de régulation de la pression de l'air dans un dispositif d'alimentation en air comprimé suivant l'une des revendications précédentes, **caractérisé en ce que** l'embrayage reste fermé et on ouvre la soupape (106) d'évacuation, s'il n'y a pas l'aptitude à l'embrayage de l'embrayage (12) n'est pas donnée en raison d'un défaut, si la valeur de la pression atteint une pression de débrayage donnée à l'avance et si la valeur de l'humidité est inférieure à la valeur de seuil donnée à l'avance.

6. Procédé de commande et/ou de régulation de la pression de l'air dans un dispositif d'alimentation en air comprimé suivant l'une des revendications précédentes, **caractérisé en ce que** l'on détecte la au moins une valeur de pression et la au moins une valeur d'humidité par une commande électronique.

7. Procédé de commande et/ou de régulation de la pression de l'air dans un dispositif d'alimentation en air comprimé suivant la revendication 6, **caractérisé en ce que** la commande (32) électronique est intégrée dans un système (6) de préparation d'air comprimé.

8. Procédé de commande et/ou de régulation de la pression de l'air dans un dispositif d'alimentation en air comprimé suivant l'une des revendications 6 ou 7, **caractérisé en ce que** la commande (36) électronique communique, par une interface, avec une commande (34) intégrée dans un système (28) de préparation d'air comprimé.

9. Procédé de commande et/ou de régulation de la pression de l'air dans un dispositif d'alimentation en air comprimé suivant l'une des revendications précédentes, **caractérisé en ce que** l'on détecte la au moins une valeur de pression par un interrupteur (24) sensible à la pression, qui, à l'atteinte de la pression de débrayage, produit un signal électrique pour l'ouverture de l'embrayage.

10. Dispositif d'alimentation en air comprimé d'un véhicule utilitaire pour effectuer un procédé suivant l'une des revendications précédentes.

11. Véhicule utilitaire ayant un dispositif d'alimentation en air comprimé suivant l'une des revendications précédentes.
